# EUROPEAN PATENT APPLICATION

(11) **EP 4 752 966 A1**
(43) Date of publication of application: **03.06.2026**
(21) Application number: 24808531.8
(22) Date of filing: 14.10.2024
(51) Int. Cl.: H01M 4/36, C01B 25/42, C01B 25/45, H01M 4/58

(54) **POSITIVE ELECTRODE MATERIAL AND PREPARATION METHOD THEREFOR, POSITIVE ELECTRODE SHEET, AND SODIUM-ION BATTERY**

(30) Priority: 08.10.2024 CN 202411398102
(71) Applicant: Hubei Wanrun New Energy Technology Co., Ltd., Shiyan, Hubei 442500 (CN)
(72) Inventor: WANG, Qin, Shiyan, Hubei 442500 (CN); LV, Fei, Shiyan, Hubei 442500 (CN); WANG, Wei, Shiyan, Hubei 442500 (CN); ZHENG, Ligen, Shiyan, Hubei 442500 (CN)
(74) Representative: Michalski Hüttermann & Partner Patentanwälte mbB
(86) International application number: PCT/CN2024/124709
(87) International publication number: WO 2026/076730

(57) **Abstract**

The present application provides a cathode material, a method for preparing the same, a cathode plate, and a sodium-ion battery, belonging to the battery field. The cathode material includes a core, the core includes sodium iron phosphate-pyrophosphate and optionally sodium iron phosphate, and a mass ratio of sodium iron phosphate to sodium iron phosphate-pyrophosphate in the cathode material is (0-0.15): (99.85-100). The present application is conducive to improving the capacity and cycling performance of the cathode material and the sodium-ion battery.

## Description

### TECHNICAL FIELD

The present application relates to the field of battery technology, particularly to a cathode material, a method for preparing the same, a cathode plate, and a sodium-ion battery.

### BACKGROUND

Sodium-ion batteries (SIB), following lithium-ion batteries, represent a different type of secondary battery and have promising application prospects such as being applicable to the field of new energy automobiles. The electrochemical performance of a sodium-ion battery mainly depends on the performance of its cathode. At present, sodium iron phosphate-pyrophosphate, due to its excellent theoretical electrochemical performance, has become one of cathode materials commonly used in the sodium-ion batteries. Despite relatively excellent theoretical electrochemical performance thereof, the sodium iron phosphate-pyrophosphate prepared in practice still has the problem of poor capacity and cycling performance.

### SUMMARY

In view of the technical problem existing in the background, the present application provides a cathode material, a method for preparing the same, a cathode plate, and a sodium-ion battery, aiming to solve the problem of poor capacity and cycling performance for the sodium iron phosphate-pyrophosphate currently prepared in practice.

In a first aspect, an embodiment of the present application provides a cathode material. The cathode material includes a core, the core includes sodium iron phosphate-pyrophosphate and optionally sodium iron phosphate, and a mass ratio of sodium iron phosphate to sodium iron phosphate-pyrophosphate in the cathode material is (0-0.15): (99.85-100).

According to the cathode material provided in the present application, by controlling the mass ratio of sodium iron phosphate (NaFePO₄) as an impurity phase to sodium iron phosphate-pyrophosphate (Na₄Fe₃(PO₄)₂P₂O₇) as a main phase to be within the above range, the mass of the sodium iron phosphate impurity phase is controlled within a relatively low proportion range, which improves the purity of the sodium iron phosphate-pyrophosphate main phase, thereby effectively reducing the deterioration of the capacity and cycling performance of the cathode material caused by the sodium iron phosphate impurity phase, and thus significantly improving the capacity and cycling performance of the cathode material.

In some embodiments, the cathode material further includes a carbon-containing coating layer coated on at least part of a surface of the core. Optionally, a thickness of the carbon-containing coating layer is 2 nm to 5 nm. Optionally, a coverage rate of the carbon-containing coating layer coated on the surface of the core is 97% to 100%.

The carbon-containing coating layer is distributed evenly on the surface of the core, which not only takes into account the electronic conductivity of the cathode material and the corrosion resistance of the cathode material to electrolyte, but also facilitates to increase the compaction density of the cathode material and improve the capacity of the cathode material.

In some embodiments, the cathode material satisfies one or more of the following conditions:
(1) a compaction density of the cathode material is 2.25 g/mL to 2.45 g/mL;
(2) a specific surface area of the cathode material is 10 m²/g to 15.5 m²/g;
(3) a powder resistivity of the cathode material is 14 Ω·cm to 45 Ω·cm.

When the cathode material satisfies the above conditions, the sodium-ion battery prepared with the cathode material beneficially exhibits excellent electrochemical performance such as energy density.

In a second aspect, an embodiment of the present application provides a method for preparing a cathode material, including:
mixing a phosphate source, a ferrous source, a pyrophosphate source, a sodium source, a first reducing agent, and a solvent to obtain a first mixed solution;
drying the first mixed solution to obtain a precursor; and
calcining the precursor to obtain the cathode material;
wherein the cathode material includes a core, the core includes sodium iron phosphate-pyrophosphate and optionally sodium iron phosphate, and a mass ratio of sodium iron phosphate to sodium iron phosphate-pyrophosphate in the cathode material is (0-0.15): (99.85-100).

The preparation method of the present application uses a solution method to prepare sodium iron phosphate-pyrophosphate. When compared with a conventional solid phase method, the present preparation method can realize uniform mixing of pyrophosphate ions, phosphate ions, ferrous ions, sodium ions, etc., which renders a shorter solid diffusion path and better reaction and fusion during calcination, and thus reduces the generation of the sodium iron phosphate impurity phase, thereby enabling the prepared cathode material to have higher particle density, and effectively improving performance of the cathode material in terms of capacity, cycling performance, etc.

In some embodiments, the method satisfies one or more of the following conditions:
(1) the sodium source includes an organic sodium salt;
   optionally, the organic sodium salt includes one or more of sodium citrate, sodium acetate, sodium malate and sodium lactate, optionally includes sodium citrate and/or sodium acetate, and further optionally includes sodium citrate and sodium acetate;
   optionally, when the organic sodium salt includes sodium citrate and sodium acetate, a molar ratio of sodium citrate to sodium acetate is (0.1-0.6): (0.4-0.9);
(2) the first reducing agent includes one or more of titanium chloride, ammonium sulfite and ascorbic acid;
(3) the ferrous source includes one or both of ferrous acetate and ferrous phosphate;
(4) the phosphate source includes one or both of ferrous phosphate and phosphoric acid;
(5) the pyrophosphate source includes pyrophosphoric acid and/or a pyrophosphate salt; optionally, the pyrophosphate salt includes sodium pyrophosphate and/or ammonium pyrophosphate;
(6) in the first mixed solution, a molar ratio of iron, phosphorus and the first reducing agent is 3: (4.04-4.1): (0.05-0.1);
   optionally, a ratio of phosphorus in the pyrophosphate source to phosphorus in the first mixed solution is (2.04-2.1): (4.04-4.1);
(7) in the first mixed solution, a molar ratio of sodium to iron is (1-1.08): 1, optionally (1.02-1.05): 1;
(8) the solvent includes one or more of pure water, deionized water and distilled water;
(9) an average particle size of the precursor is 5 µm to 20 µm.

In the present application, the organic sodium salt is used to provide both a sodium source and a carbon source. When compared with a manner of separately introducing the carbon source and the sodium source, the present manner is conducive to distributing the carbon source more uniformly, such that the carbon-containing coating layer exhibits a better effect on improving the corresponding electrochemical performance of the cathode material.

In some embodiments, the ferrous source is selected from ferrous phosphate, and the ferrous phosphate is prepared by a method including:
adding a first pH regulator into a second mixed solution containing a ferrous salt and a second reducing agent to regulate a pH value of the second mixed solution to be 7.2 to 7.5, thereby obtaining a sol containing ferrous hydroxide;
adding a second pH regulator into the sol to regulate a pH value of the sol to be 3.5 to 4.5, thereby obtaining the ferrous phosphate.

Optionally, the first pH regulator includes aqueous ammonia and/or sodium hydroxide, and further optionally includes aqueous ammonia. When the first pH regulator includes aqueous ammonia, a concentration of the first pH regulator is 5 mol/L to 10 mol/L.

Optionally, the second reducing agent includes one or more of sodium borohydride, phosphorous acid and hydrazine hydrate.

Optionally, the second pH regulator includes phosphoric acid.

Optionally, in the second mixed solution, a molar ratio of iron in the ferrous salt to the second reducing agent is 1: (0.01-0.1).

By using the above method to prepare ferrous phosphate, the prepared ferrous phosphate can have a relatively small primary particle diameter. In the subsequent cathode material preparation process with the ferrous phosphate as a raw material, the ferrous phosphate can be dissolved more quickly in the solvent at a faster dissolution speed and a more complete dissolution degree, which causes the core of the final cathode material to have a chemical ratio closer to the theoretical value (i.e., Na₄Fe₃(PO₄)₂P₂O₇), thereby being conducive to further inhibiting the generation of the sodium iron phosphate impurity phase.

In some embodiments, after regulating the pH value of the sol to be 3.5 to 4.5, the method further includes heating the sol to a temperature ranging from 80°C to 95°C, and then stirring for 30 min to 60 min.

In the technical solutions of embodiments of the present application, the sol is heated and then stirred for reaction, which facilitates the precipitation of ferrous sulfate.

In some embodiments, the calcining process includes heating the precursor to a preset temperature and then maintaining the temperature at the preset temperature.

Optionally, the preset temperature is 600°C to 700°C.

Optionally, a time period of maintaining the temperature at the preset temperature is 4 h to 8 h.

Optionally, the calcining process is performed under a protective atmosphere.

Further optionally, the protective atmosphere includes a nitrogen gas atmosphere and/or an argon gas atmosphere.

When the preset temperature or the temperature maintaining time period in the calcining process is within the above respective ranges, the compactness of the carbon-containing coating layer is improved, while the purity of sodium iron phosphate-pyrophosphate in the cathode material is improved.

In a third aspect, an embodiment of the present application provides a cathode plate. The cathode plate includes the cathode material described in the first aspect of the present application or the cathode material prepared by the method described in the second aspect of the present application.

In this embodiment, the cathode plate includes the cathode material and thus has a relatively high capacity and a relatively good cycling performance.

In a fourth aspect, an embodiment of the present application provides a sodium-ion battery. The sodium-ion battery includes the cathode plate in the third aspect.

In this embodiment, the sodium-ion battery includes the cathode plate and thus has a relatively high capacity and a relatively good cycling performance.

In a fifth aspect, an embodiment of the present application provides an electrical device. The electrical device includes the sodium-ion battery in the fourth aspect of the present application.

The electrical device of the present application includes the sodium-ion battery provided in the present application, and thus has at least the same advantages as the sodium-ion battery.

The above description only summarizes the technical solutions of the present application. In order to more clearly understand the technical means of the present application, contents of the specification can be referred to for implementation. Besides, the specific embodiments of the present application are described below in order to make the above and other objectives, technical features, and advantages of the present application clearer and more understandable.

### BRIEF DESCRIPTION OF THE DRAWINGS

In order to illustrate the technical solutions of the present application more clearly, the drawings used in the embodiments will be described briefly below. Apparently, the following described drawings are merely for the embodiments of the present application, and other drawings can be derived by those of ordinary skill in the art without any creative effort.
FIG. 1 is a schematic flowchart of a preparation process for a cathode material provided in the present application.
FIG. 2 is a scanning electron microscopy (SEM) result photo of the cathode material prepared in Example 1 of the present application.
FIG. 3 is a scanning electron microscopy (SEM) result photo of the cathode material prepared in Example 2 of the present application.

### DETAILED DESCRIPTION

Embodiments of technical solutions of the present application will now be described in detail with reference to the accompanying drawings. The following embodiments are only for illustrating the technical solutions of the present application more clearly, therefore only used as examples, but they should not be construed as limiting the protection scope of the present application.

Unless otherwise defined, all technical and scientific terms used herein have the same meaning as commonly understood by those of ordinary skill in the art to which the present application pertains. The terms used in the present application herein are for the purpose of describing embodiments only and are not intended to limit the present application. The terms "comprising", "including" and "having" and any variations thereof in the specification and claims as well as the above description of drawings of the present application are intended to cover non-exclusive inclusions.

In the description of the embodiments of the present application, technical terms "first", "second", etc. are only used to distinguish different objects and cannot be understood as indicating or implying relative importance or implicitly indicating the quantity, particular order, or primary and secondary relationship of the indicated technical features. In the description of embodiments of the present application, the "plurality" means two or more than two, unless otherwise specifically defined.

When "embodiment" is mentioned herein, it means that a particular feature, structure, or characteristic described based on the embodiment can be included in at least one embodiment of the present application. When appeared in various places in the specification, the phrase does not necessarily indicate the same embodiment, nor be a separate or alternative embodiment mutually exclusive of other embodiments. It is explicitly and implicitly understood by those skilled in the art that the embodiment described herein can be combined with other embodiments.

In the description of the embodiments of the present application, the term "and/or" only describes the association relationship of associated objects, indicating that there can be three relationships. For example, A and/or B may indicate three conditions: A alone, both A and B, and B alone. In addition, the character "/" herein generally indicates that the relationship between the former and latter objects is an "or" relationship.

In the description of the embodiments of the present application, the term "plurality" refers to at least two (including two). Similarly, "a plurality of groups" refers to at least two groups (including two groups), and "a plurality of pieces" refers to at least two pieces (including two pieces).

In the description of the embodiments of the present application, the technical terms "center", "longitudinal", "transverse", "length", "width", "thickness", "upper", "lower", "front", "back", "left", "right", "vertical", "horizontal", "top", "bottom", "inner", "outer", "clockwise", "counterclockwise", "axial", "radial", "circumferential" etc. indicate the orientations or positional relationships on the basis of the drawings. These terms are only for the convenience of describing the present application and simplifying the description, rather than indicating or implying that the related devices or elements must have the specific orientations, or be constructed or operated in the specific orientations, and therefore cannot be understood as limitations of the embodiments of the present application.

In the description of the embodiments of the present application, unless otherwise clearly specified and defined, the technical terms "installed", "connected", "coupled", "fixed" and the like should be understood broadly. For example, an element, when being referred to as being "installed", "connected", "coupled", or "fixed" to another element, unless otherwise specifically defined, can be fixedly connected, detachably connected, or integrated to the other element, can be mechanical connected or electrically connected to the other element, and can be directly connected to the other element, or connected to the other element via an intermediate medium, or can be internal communication between two elements or interaction between two elements. For those skilled in the art, the specific meanings of the above terms in the embodiments of the present application can be understood according to specific circumstances.

At present, in addition to including sodium iron phosphate-pyrophosphate as a main phase, the obtained sodium iron phosphate-pyrophosphate cathode material usually contains a certain amount of impurity phases such as sodium iron phosphate. The presence of the impurity phases such as sodium iron phosphate is easy to deteriorate the capacity and cycling performance of the cathode material. Moreover, the higher the content of the impurity phases in the cathode material, the more serious the deterioration of the capacity and cycling performance is, resulting in relatively low capacity and cycling performance of the cathode material.

In order to solve the technical problem of poor capacity and cycling performance of sodium iron phosphate-pyrophosphate, the present application provides a cathode material, a method for preparing the same, a cathode plate, a sodium-ion battery, and an electrical device. By improving the existing sodium iron phosphate-pyrophosphate cathode material and the method for preparing the same, the capacity and cycling performance thereof can be improved, thereby also improving the capacity and cycling performance of the cathode plate, secondary battery and electrical device thereof.

In a first aspect, the present application provides a cathode material. The cathode material includes a core, the core includes sodium iron phosphate-pyrophosphate and optionally sodium iron phosphate, and a mass ratio of sodium iron phosphate to sodium iron phosphate-pyrophosphate in the cathode material is (0-0.15): (99.85-100).

According to the cathode material provided in the present application, by controlling a mass ratio of sodium iron phosphate (NaFePO₄) as an impurity phase to sodium iron phosphate-pyrophosphate (Na₄Fe₃(PO₄)₂P₂O₇) as a main phase to be within the above range, the mass percentage of the sodium iron phosphate impurity phase is controlled within a relatively low range, which improves the purity of the sodium iron phosphate-pyrophosphate main phase, thereby effectively reducing the deterioration of the capacity and cycling performance of the cathode material caused by the sodium iron phosphate impurity phase, and thus significantly improving the capacity and cycling performance of the cathode material.

In some embodiments, a mass percentage of sodium iron phosphate-pyrophosphate in the cathode material is 99.85% to 100%. For example, the mass percentage can be 99.85%, 99.86%, 99.87%, 99.88%, 99.89%, 99.9%, 99.91%, 99.92%, 99.93%, 99.4%, 99.95%, 99.96%, 99.97%, 99.98%, 99.99%, 100%, or a value within a range defined by any two of the above values.

In the technical solutions of the embodiments of the present application, sodium iron phosphate-pyrophosphate has a relatively high mass percentage in the cathode material. That is, the purity of the sodium iron phosphate-pyrophosphate main phase in the cathode material is relatively high, which can effectively improve the capacity and cycling performance of the cathode material.

In some embodiments, the mass percentage of sodium iron phosphate in the cathode material is 0 to 0.15%. For example, the mass percentage can be 0, 0.01%, 0.02%, 0.03%, 0.04%, 0.05%, 0.06%, 0.07%, 0.08%, 0.09%, 0.1%, 0.11%, 0.12%, 0.13%, 0.14%, 0.15%, or a value within a range defined by any two of the above values.

In the technical solutions of the embodiments of the present application, when the mass percentage of sodium iron phosphate in the cathode material is within the above range, sodium iron phosphate-pyrophosphate can have a relatively high mass percentage in the cathode material. That is, the purity of the sodium iron phosphate-pyrophosphate main phase in the cathode material can be relatively high, such that the capacity and cycling performance of the cathode material can be effectively improved.

In some embodiments, in the cathode material, a mass fraction of sodium is 14% to 16%, a mass fraction of iron is 25% to 26%, and a mass fraction of phosphorus is 17% to 21%. For example, in the cathode material, the mass fraction of sodium can be 14%, 14.5%, 15%, 15.5%, 16%, or a value within a range defined by any two of the above values; the mass fraction of iron can be 25%, 25.5%, 26%, or a value within a range defined by any two of the above values; the mass fraction of phosphorus can be 17%, 18%, 19%, 20%, 21%, or a value within a range defined by any two of the above values.

In some embodiments, the cathode material further includes a carbon-containing coating layer coated on at least part of the surface of the core.

In some embodiments, a mass percentage of the carbon-containing coating layer in the cathode material is 1.2% to 4.5%. For example, the mass percentage can be 1.2%, 1.25%, 1.5%, 2%, 2.5%, 3%, 3.5%, 4%, 4.5%, or a value within a range defined by any two of the above values.

In the technical solutions of the embodiments of the present application, the carbon-containing coating layer in the cathode material can effectively improve the electronic conductivity of sodium iron phosphate-pyrophosphate, thereby further improving the electrochemical performance of the cathode material in aspects of rate performance and the like.

In some embodiments, a thickness of the carbon-containing coating layer is 2 nm to 5 nm. For example, the thickness of the carbon-containing coating layer can be 2 nm, 2.3 nm, 2.5 nm, 2.7 nm, 3 nm, 3.3 nm, 3.5 nm, 3.7 nm, 4 nm, 4.3 nm, 4.5 nm, 4.7 nm, 5 nm, or a value within a range defined by any two of the above values, thereby being beneficial to take into account both the electronic conductivity of the cathode material and the corrosion resistance of the cathode material to electrolyte.

In some embodiments, a coverage rate of the carbon-containing coating layer coated on the surface of the core is 97% to 100%. For example, the coverage rate can be 97%, 98%, 99%, 100%, or a value within a range defined by any two of the above values. As such, the carbon-containing coating layer is beneficially distributed evenly on the surface of the core, which not only takes into account the electronic conductivity of the cathode material and the corrosion resistance of the cathode material to electrolyte, but also facilitates to increase the compaction density of the cathode material and improve the capacity of the cathode material.

It can be understood that the "coverage rate" in the present application refers to a ratio of the area of the core surface covered by the carbon-containing coating layer to the core surface area.

In some embodiments, a compaction density of the cathode material is 2.25 g/mL to 2.45 g/mL. For example, the compaction density can be 2.25 g/mL, 2.27 g/mL, 2.3 g/mL, 2.32 g/mL, 2.35 g/mL, 2.37 g/mL, 2.4 g/mL, 2.41 g/mL, 2.43 g/mL, 2.45 g/mL, or a value within a range defined by any two of the above values.

It should be noted that the compaction density of the cathode material refers to a compaction density of the cathode material measured under a pressure of 3 tons.

In the technical solutions of the embodiments of the present application, the cathode material has a relatively high compaction density, which facilitates the sodium-ion battery to have a relatively high energy density.

In some embodiments, a specific surface area (i.e., BET specific surface area) of the cathode material is 10 m²/g to 15.5 m²/g. For example, the specific surface area can be 10 m²/g, 11 m²/g, 12 m²/g, 13 m²/g, 14 m²/g, 15 m²/g, 15.5 m²/g, or a value within a range defined by any two of the above values. As such, the capacity and cycling performance of the sodium-ion battery is beneficially further improved.

In some embodiments, a powder resistivity of the cathode material is 14 Ω·cm to 45 Ω·cm. For example, the powder resistivity can be 14 Ω·cm, 20 Ω·cm, 25 Ω·cm, 27 Ω·cm, 30 Ω·cm, 33 Ω·cm, 35 Ω·cm, 37 Ω·cm, 40 Ω·cm, 42 Ω·cm, 45 Ω·cm, or a value within a range defined by any two of the above values, thereby being beneficial to improving the cycling performance of the sodium-ion battery.

In a second aspect, the present application provides a method for preparing a cathode material. The method can be used to prepare the cathode material in the first aspect of the present application. The method can include the following steps:
S1, mixing a phosphate source, a ferrous source, a pyrophosphate source, a sodium source, a first reducing agent, and a solvent to obtain a first mixed solution;
S2, drying the first mixed solution to obtain a precursor; and
S3, calcining the precursor to obtain the cathode material;
   wherein the cathode material includes a core, the core includes sodium iron phosphate-pyrophosphate and optionally sodium iron phosphate, and a mass ratio of sodium iron phosphate to sodium iron phosphate-pyrophosphate in the cathode material is (0-0.15): (99.85-100).

The preparation method of the present application uses a solution method to prepare sodium iron phosphate-pyrophosphate. When compared with a conventional solid phase method, the present preparation method can realize uniform mixing of pyrophosphate ions, phosphate ions, ferrous ions, sodium ions, etc., which renders a shorter solid diffusion path and better reaction and fusion during calcination, and thus reduces the generation of the sodium iron phosphate impurity phase, thereby enabling the prepared cathode material to have higher particle density, and effectively improving performance of the cathode material in terms of capacity, cycling performance, etc.

In some embodiments, the pyrophosphate source includes pyrophosphoric acid and/or a pyrophosphate salt; optionally, the pyrophosphate salt includes sodium pyrophosphate and/or ammonium pyrophosphate.

In some embodiments, the sodium source includes an organic sodium salt.

It should be noted that the "organic sodium salt" in the present application refers to a salt having sodium ions and acid anions, in which the number of carbon atoms contained in the acid anion is ≥2.

In some embodiments, the organic sodium salt includes one or more of sodium citrate, sodium acetate, sodium malate and sodium lactate.

In the technical solutions of the embodiments of the present application, the organic sodium salt is used to provide both a sodium source and a carbon source. When compared with a manner of separately introducing the carbon source and the sodium source, the present manner is conducive to distributing the carbon source more uniformly, such that the carbon-containing coating layer exhibits a better effect on improving the corresponding electrochemical performance of the cathode material.

In some embodiments, the organic sodium salt includes sodium citrate and/or sodium acetate, and optionally includes sodium citrate and sodium acetate.

In the technical solutions of the embodiments of the present application, when the organic sodium salt includes sodium citrate and sodium acetate, the sodium citrate and the sodium acetate produce a synergistic effect, which is beneficial to improving the density of the carbon-containing coating layer, thereby improving the electronic conductivity of the cathode material and the corrosion resistance of the cathode material to electrolyte, while improving the compaction density of the cathode material.

In some embodiments, when the organic sodium salt includes sodium citrate and sodium acetate, a molar ratio of sodium citrate to sodium acetate is (0.1-0.6): (0.4-0.9), which is beneficial to further improving the density of the carbon-containing coating layer and further improving the compaction density of the cathode material. For example, the molar ratio of sodium citrate to sodium acetate can be 0.1:0.9, 0.1:0.4, 0.2:0.7, 0.3:0.8, 0.6:0.9, 0.5:0.5, 0.5:0.4, 0.6:0.4, or a value within a range defined by any two of the above values.

In some embodiments, the first reducing agent includes one or more of titanium chloride, ammonium sulfite, and ascorbic acid. The first reducing agent can prevent ferrous ions from being oxidized during the precipitation process.

In some embodiments, the ferrous source includes one or both of ferrous acetate and ferrous phosphate.

In some embodiments, the phosphate source includes one or both of ferrous phosphate and phosphoric acid.

In some embodiments, in the first mixed solution, a molar ratio of iron, phosphorus and the first reducing agent is 3:(4.04-4.1):(0.05-0.1). For example, the molar ratio can be 3:4.04:0.1, 3:4.05:0.09, 3:4.06:0.08, 3:4.07:0.07, 3:4.08:0.06, 3:4.09:0.05, 3:4.1:0.05, or a value within a range defined by any two of the above values.

In some embodiments, a ratio of phosphorus in the pyrophosphate source to phosphorus in the first mixed solution is (2.04-2.1): (4.04-4.1). For example, the ratio of phosphorus in the pyrophosphate source to phosphorus in the first mixed solution can be 2.04:4.1, 2.05:4.09, 2.06:4.08, 2.07:4.07, 2.08:4.06, 2.09:4.05, 2.1:4.04, or a value within a range defined by any two of the above values.

In some embodiments, when the phosphate source and the ferrous source are both ferrous phosphate, a molar ratio of phosphorus in ferrous phosphate, iron in ferrous phosphate, phosphorus in the pyrophosphate source and the first reducing agent is 2:3:(2.04-2.1):(0.05-0.1). For example, the molar ratio can be 2:3:2.04:0.1, 2:3:2.05:0.09, 2:3:2.06:0.08, 2:3:2.07:0.07, 2:3:2.08:0.06, 2:3:2.09:0.05, 2:3:2.1:0.05, or a value within a range defined by any two of the above values.

The conventional method for preparing sodium iron phosphate-pyrophosphate usually uses a phosphate salt as a raw material and converts the phosphate salt into a pyrophosphate salt at a high temperature. After the conversion, the molar ratio of phosphate ions to pyrophosphate ions in the obtained sodium iron phosphate-pyrophosphate is usually uncontrollable, and a large amount of sodium iron phosphate as an impurity phase exists. In contrast, in the present application, by adjusting the molar ratio of iron, phosphorus in ferrous phosphate, phosphorus in the pyrophosphate source and the first reducing agent to be within the above range, the molar ratio of pyrophosphate ions to phosphate ions in the final sodium iron phosphate-pyrophosphate is controlled without the need of conversion of the phosphate salt to the pyrophosphate salt at a high temperature, thereby effectively reducing the generation of the sodium iron phosphate impurity phase.

In some embodiments, in the first mixed solution, a molar ratio of sodium ions to ferrous ions is (1-1.08):1, optionally (1.02-1.05):1. For example, the molar ratio can be 1:1, 1.02:1, 1.03:1, 1.04:1, 1.05:1, 1.06:1, 1.07:1, 1.08:1, or a value within a range defined by any two of the above values.

The present application uses ferrous ions as the iron source, which do not need to be reduced during calcination as compared to using ferric ions as the raw material, thereby facilitating to reduce the calcination temperature for sodium iron phosphate-pyrophosphate, improving the uniformity of crystal grains and particles of the cathode material, and reducing energy consumption.

In some embodiments, the solvent includes one or more of pure water, deionized water and distilled water.

In some embodiments, when preparing the first mixed solution, a pyrophosphoric acid solution can be first formulated with pyrophosphoric acid as the pyrophosphate source and a solvent, and then the phosphate source, the ferrous source, the sodium source and the first reducing agent are dissolved in the pyrophosphoric acid solution, thereby obtaining the first mixed solution.

In some embodiments, a concentration of the pyrophosphoric acid solution can be 1 mol/L to 2 mol/L.

In some embodiments, an average particle size of the precursor is 5 µm to 20 µm. For example, the average particle size of the precursor can be 5 µm, 7 µm, 9 µm, 11 µm, 13 µm, 15 µm, 17 µm, 19 µm, 20 µm, or a value within a range defined by any two of the above values.

In some embodiments, the drying in step S2 can be spray drying.

In some embodiments, during the spray drying, an air inlet temperature is 200°C to 350°C, an average particle size of the obtained precursor is 5 µm to 20 µm, and a moisture content of the material is ≤1.0 wt%, i.e., a mass fraction of H₂O in the precursor is less than or equal to 1.0%. For example, the air inlet temperature can be 200°C, 210°C, 230°C, 250°C, 270°C, 290°C, 310°C, 330°C, 350°C, or a value within a range defined by any two of the above values; and the average particle size of the precursor can be 5 µm, 8 µm, 10 µm, 12 µm, 14 µm, 16 µm, 18 µm, 20 µm, or a value within a range defined by any two of the above values.

In some embodiments, the ferrous phosphate is prepared by a method including:
S10, adding a first pH regulator into a second mixed solution containing a ferrous salt and a second reducing agent to regulate a pH value of the second mixed solution to be 7.2 to 7.5, thereby obtaining a sol containing ferrous hydroxide;
S20, adding a second pH regulator into the sol to regulate a pH value of the sol to be 3.5 to 4.5, thereby obtaining the ferrous phosphate.

In the process of preparing ferrous phosphate according to steps S10 and S20, a sol containing ferrous hydroxide precipitate is first formed in step S10, and then is converted into ferrous phosphate in step S20, so that the prepared ferrous phosphate beneficially has a relatively small primary particle diameter. In the subsequent cathode material preparation process with the ferrous phosphate as a raw material, the ferrous phosphate can be dissolved more quickly in the solvent at a faster dissolution speed and a more complete dissolution degree, which causes the core of the final cathode material to have a chemical ratio closer to the theoretical value (i.e., Na₄Fe₃(PO₄)₂P₂O₇), thereby being conducive to further inhibiting the generation of the sodium iron phosphate impurity phase.

In some embodiments, in step S10, the pH value of the second mixed solution can be 7.2, 7.3, 7.4, 7.5, or a value within a range defined by any two of the above values, thereby being conducive to the formation of the sol containing ferrous hydroxide.

In some embodiments, in step S20, the pH value of the sol can be 3.5, 3.7, 3.9, 4.1, 4.3, 4.5, or a value within a range defined by any two of the above values, thereby being conducive to the conversion of ferrous hydroxide into ferrous phosphate precipitate.

In some embodiments, the first pH regulator includes aqueous ammonia and/or sodium hydroxide, and optionally includes aqueous ammonia.

In some embodiments, when the first pH regulator includes aqueous ammonia, a concentration of the first pH regulator is 5 mol/L to 10 mol/L. For example, the concentration can be 5 mol/L, 6 mol/L, 7 mol/L, 8 mol/L, 9 mol/L, 10 mol/L, or a value within a range defined by any two of the above values.

In the technical solutions of the embodiments of the present application, the first pH regulator containing aqueous ammonia is beneficial to producing ferrous hydroxide and volatilization of ammonium ions in the form of ammonia gas during the subsequent calcining process, thereby not introducing other impurity elements, which is conducive to improving the purity of sodium iron phosphate-pyrophosphate in the prepared cathode material.

In some embodiments, the ferrous salt includes one or more of ferrous sulfate, ferrous chloride, and ferrous acetate.

In some embodiments, the second reducing agent includes one or more of sodium borohydride, phosphorous acid, and hydrazine hydrate.

In some embodiments, a molar ratio of the ferrous salt to the second reducing agent is 1:(0.01-0.1). For example, the molar ratio of the ferrous salt to the second reducing agent can be 1:0.01, 1:0.02, 1:0.03, 1:0.04, 1:0.05, 1:0.06, 1:0.07, 1:0.08, 1:0.09, 1:0.1, or a value within a range defined by any two of the above values.

In some embodiments, in the second mixed solution, a molar ratio of iron in the ferrous salt to the second reducing agent is 1:(0.01-0.1). For example, the molar ratio of iron in the ferrous salt to the second reducing agent can be 1:0.01, 1:0.02, 1:0.03, 1:0.04, 1:0.05, 1:0.06, 1:0.07, 1:0.08, 1:0.09, 1:0.1, or a value within a range defined by any two of the above values.

In some embodiments, the second pH regulator includes phosphoric acid, which adjusts the pH value without introducing other impurities.

In some embodiments, after regulating the pH value of the sol to be 3.5 to 4.5, the method further includes heating the sol to a temperature ranging from 80°C to 95°C, and then stirring for 30 min to 60 min.

For example, the temperature can be heated to be 80°C, 81°C, 83°C, 85°C, 87°C, 89°C, 91°C, 93°C, 95°C, or a value within a range defined by any two of the above values; and the stirring time can be 30 min, 35 min, 40 min, 45 min, 50 min, 55 min, 60 min, or a value within a range defined by any two of the above values.

In the technical solutions of the embodiments of the present application, the sol is heated and then stirred for reaction, which facilitates the precipitation of ferrous sulfate.

In some embodiments, the calcining process includes heating the precursor to a preset temperature and then maintaining the temperature at the preset temperature.

In some embodiments, during the calcining process, a temperature heating rate for the precursor is 80°C/h to 120°C/h. For example, the temperature heating rate for the precursor can be 80°C/h, 90°C/h, 100°C/h, 110°C/h, 120°C/h, or a value within a range defined by any two of the above values.

In some embodiments, the preset temperature is 600°C to 700°C. For example, the preset temperature can be 600°C, 610°C, 620°C, 630°C, 640°C, 650°C, 660°C, 670°C, 680°C, 690°C, or a value within a range defined by any two of the above values.

In some embodiments, during the calcining process, a time period of maintaining the temperature at the preset temperature is 4 h to 8 h. For example, the time period of maintaining the temperature at the preset temperature can be 4 h, 5 h, 6 h, 7 h, 8 h, or a value within a range defined by any two of the above values.

In the technical solutions of the embodiments of the present application, when the preset temperature or the temperature maintaining time period in the calcining process is within the above respective ranges, the compactness of the carbon-containing coating layer is advantageously improved, while the purity of sodium iron phosphate-pyrophosphate in the cathode material is improved.

In some embodiments, the calcining process is performed under a protective atmosphere.

In some embodiments, the protective atmosphere includes a nitrogen gas atmosphere and/or an argon gas atmosphere.

In some embodiments, during the temperature maintaining process, a humidity is controlled to be at 0.2% or less, and an oxygen gas content is controlled to be less than 1 ppm. When the temperature maintaining process ends, the material is cooled to obtain an output material, which is then crushed, screened, iron-removed, and packaged to obtain the cathode material.

In a third aspect, the present application provides a cathode plate. The cathode plate includes the cathode material in the first aspect of the present application or the cathode material prepared by the preparation method in the second aspect of the present application.

The cathode plate contains the cathode material in the first aspect of the present application or the cathode material prepared by the preparation method in the second aspect of the present application, and thus has a relatively high capacity and a relatively good cycling performance.

In a fourth aspect, the present application provides a sodium-ion battery. The sodium-ion battery includes the cathode plate in the third aspect of the present application.

The sodium-ion battery includes the cathode plate in the third aspect of the present application, and thus has a relatively high capacity and a relatively good cycling performance.

In a fifth aspect, the present application provides an electrical device. The electrical device includes the sodium-ion battery in the fourth aspect of the present application.

The electrical device includes the sodium-ion battery in the fourth aspect of the present application, and thus has at least the same advantages as the sodium-ion battery.

In some embodiments, the electrical device can be, but is not limited to mobile phones, tablets, notebook computers, electric toys, electric tools, battery cars, electric cars, ships, spacecraft, etc. Among them, the electric toy may include a stationary electric toy or a mobile electric toy, such as a game console, an electric car toy, an electric ship toy, an electric airplane toy, etc.; and the spacecraft may include an airplane, a rocket, a space shuttle, a spaceship, etc.

Some specific embodiments are listed below. It should be noted that the embodiments described below are illustrative and are only used to explain the present application, and cannot be understood as limiting the present application. If specific techniques or conditions are not indicated in the embodiments, the processes are carried out in accordance with the techniques or conditions described in literature in the art or in accordance with product instructions. The reagents or instruments for which no manufacturers are noted are all common products that can be purchased from the market.

### I. Preparation methods

### Example 1

### 1. Preparation of ferrous phosphate

(1) Ferrous sulfate and hydrazine hydrate were mixed in a molar ratio of 1:0.1, and stirred evenly to obtain a mixed solution. 8 mol/L of aqueous ammonia was added to the mixed solution with the addition lasting 25 min at a temperature of 25°C to adjust the pH value of the mixed solution to 7.35. Then the mixed solution was stirred until the mixed solution changed from gel to sol, thereby obtaining a uniform sol containing ferrous hydroxide.
(2) Phosphoric acid was added to the sol to adjust the pH value to 4. The sol was heated to a temperature of 90°C, stirred at the temperature for 50 min, and then filtered and washed to obtain a ferrous phosphate precipitate.

### 2. Preparation of cathode material

(1) Ferrous phosphate and ascorbic acid were dissolved in a pyrophosphoric acid solution. Then, sodium citrate and sodium acetate were added to the solution and stirred to dissolve, obtaining a mixed solution. A molar ratio of ferrous phosphate, pyrophosphoric acid in the pyrophosphoric acid solution, and ascorbic acid was 1:1.035:0.07, a molar ratio of sodium citrate to sodium acetate was 0.4:0.6, a concentration of the pyrophosphoric acid solution was 1.5 mol/L, and a molar ratio of sodium ions to ferrous ions in the mixed solution was 1.03:1.
(2) The mixed solution was spray dried, during which an air inlet temperature was 280°C, to obtain a precursor with an average particle size of 12 µm and a moisture content of ≤1.0 wt%.
(3) The precursor was calcinated. During calcination, nitrogen gas was used as a protective atmosphere, and the temperature was heated at a rate of 100°C/h to 650°C and then maintained for 6 h. During the temperature maintaining process, a humidity was controlled to be at 0.2%, and an oxygen gas content was controlled to be less than 1 ppm. After calcination, the material was cooled to obtain an output material, which was then crushed, screened, iron-removed, and packaged to obtain the cathode material.

### Example 2

### 1. Preparation of ferrous phosphate

(1) Ferrous chloride and sodium borohydride were mixed in a molar ratio of 1:0.08, and stirred evenly to obtain a mixed solution. 5 mol/L of aqueous ammonia was added to the mixed solution with the addition lasting 15 min at a temperature of 20°C to adjust the pH value of the mixed solution to 7.2. Then the mixed solution was stirred until the mixed solution changed from gel to sol, thereby obtaining a uniform sol.
(2) Phosphoric acid was added to the sol to adjust the pH value to 3.5. The sol was heated to a temperature of 80°C, stirred at the temperature for 30 min, and then filtered and washed to obtain a ferrous phosphate precipitate.

### 2. Preparation of cathode material

(1) Ferrous phosphate and titanium trichloride were dissolved in a pyrophosphoric acid solution. Then, sodium citrate and sodium acetate were added to the solution and stirred to dissolve, obtaining a mixed solution. A molar ratio of ferrous phosphate, pyrophosphoric acid in the pyrophosphoric acid solution, and titanium trichloride was 1:1.02:0.05, a molar ratio of sodium citrate to sodium acetate was 0.1:0.9, a concentration of the pyrophosphoric acid solution was 1 mol/L, and a molar ratio of sodium ions to ferrous ions in the mixed solution was 1.02:1.
(2) The mixed solution was spray dried, during which an air inlet temperature was 200°C, to obtain a precursor with an average particle size of 5 µm and a moisture content of ≤1.0 wt%.
(3) The precursor was calcinated. During calcination, nitrogen gas was used as a protective atmosphere, and the temperature was heated at a rate of 80°C/h to 600°C and then maintained for 4 h. During the temperature maintaining process, a humidity was controlled to be at 0.2%, and an oxygen gas content was controlled to be less than 1 ppm. After calcination, the material was cooled to obtain an output material, which was then crushed, screened, iron-removed, and packaged to obtain the cathode material.

### Example 3

### 1. Preparation of ferrous phosphate

(1) Ferrous sulfate and phosphorous acid were mixed in a molar ratio of 1:0.03, and stirred evenly to obtain a mixed solution. 10 mol/L of aqueous ammonia was added to the mixed solution with the addition lasting 30 min at a temperature of 30°C to adjust the pH value of the mixed solution to 7.5. Then the mixed solution was stirred until the mixed solution changed from gel to sol, thereby obtaining a uniform sol.
(2) Phosphoric acid was added to the sol to adjust the pH value to 4.5. The sol was heated to a temperature of 95°C, stirred at the temperature for 60 min, and then filtered and washed to obtain a ferrous phosphate precipitate.

### 2. Preparation of cathode material

(1) Ferrous phosphate and ammonium sulfite were dissolved in a pyrophosphoric acid solution. Then, sodium citrate and sodium acetate were added to the solution and stirred to dissolve, obtaining a mixed solution. A molar ratio of ferrous phosphate, pyrophosphoric acid in the pyrophosphoric acid solution, and ascorbic acid was 1:1.05:0.1, a molar ratio of sodium citrate to sodium acetate was 0.6:0.4, a concentration of the pyrophosphoric acid solution was 2 mol/L, and a molar ratio of sodium ions to ferrous ions in the mixed solution was 1.05:1.
(2) The mixed solution was spray dried, during which an air inlet temperature was 350°C, to obtain a precursor with an average particle size of 20 µm and a moisture content of ≤1.0 wt%.
(3) The precursor was calcinated. During calcination, nitrogen gas was used as a protective atmosphere, and the temperature was heated at a rate of 120°C/h to 700°C and then maintained for 8 h. During the temperature maintaining process, a humidity was controlled to be at 0.2%, and an oxygen gas content was controlled to be less than 1 ppm. After calcination, the material was cooled to obtain an output material, which was then crushed, screened, iron-removed, and packaged to obtain the cathode material.

### Example 4

The preparation process was similar to that of Example 1, except that in step 2-(1), the molar ratio of ferrous phosphate, pyrophosphoric acid in the pyrophosphoric acid solution and ascorbic acid was 1:1.02:0.1.

### Example 5

The preparation process was similar to that of Example 1, except that in step 2-(1), the molar ratio of ferrous phosphate, pyrophosphoric acid in the pyrophosphoric acid solution and ascorbic acid was 1: 1.05:0.05.

### Example 6

The preparation process was similar to that of Example 1, except that in step 2-(1), the molar ratio of ferrous phosphate, pyrophosphoric acid in the pyrophosphoric acid solution and ascorbic acid was 1:1:0.15

### Example 7

The preparation process was similar to that of Example 1, except that in step 2-(1), the molar ratio of ferrous phosphate, pyrophosphoric acid in the pyrophosphoric acid solution and ascorbic acid was 1:1.1:0.02.

### Example 8

The preparation process was similar to that of Example 1, except that in step 2-(1), the molar ratio of sodium ions to ferrous ions is 1:1.

### Example 9

The preparation process was similar to that of Example 1, except that in step 2-(1), the molar ratio of sodium ions to ferrous ions is 1.08:1.

### Example 10

The preparation process was similar to that of Example 1, except that in step 2-(1), sodium acetate was replaced with an equimolar amount of sodium citrate.

### Example 11

The preparation process was similar to that of Example 1, except that in step 2-(1), sodium citrate and sodium acetate were replaced with sodium dihydrogen phosphate and citric acid, in which the molar amount of citric acid was equal to the total molar amount of sodium citrate and sodium acetate, and the molar ratio of sodium ions to ferrous ions in the mixed solution was still 1.05:1.

### Comparative Example 1

The preparation process was similar to that of Example 1, except that: step 1 was not conducted; step 2-(1) was as follows: Ferric phosphate (with an iron/phosphorus ratio of 0.97:1 and a BET specific surface area of 8.7 m²/g), sodium carbonate, trisodium phosphate and citric acid were mixed, and formed into a slurry by adding water, and then ground until a particle size of the slurry reached 320 nm. A molar ratio of sodium, iron and phosphorus in the slurry was 4.03:3:4.04. In step 2-(3), the calcinating temperature was 550°C.

### Comparative Example 2

The preparation process was similar to that of Comparative Example 1, except that in step 2-(3), the calcinating temperature was 650°C.

### II. Test Methods

1. The compaction density of the cathode material was tested by using a compaction density tester with a test pressure of 3 tons (T) and a pressing time of 30 seconds.
2. The thickness of the carbon-containing coating layer was tested by using a transmission electron microscope (e.g., Hitachi HT7800) to observe the thickness of the carbon-containing coating layer.
3. The coverage rate of the carbon-containing coating layer was measured by using a transmission electron microscope (TEM) and an energy dispersive X-ray spectrometer (EDX).
4. The average particle size of the cathode material was tested by using a laser particle size analyzer such as Mastersizer 3000 laser particle size analyzer produced by Malvern Instruments Ltd., UK.
5. In the cathode material, the respective mass percentages of Na₄Fe₃(PO₄)₂P₂O₇ and NaFePO₄ were determined by obtaining a XRD spectrum of the cathode material, and determining height percentages of the main peak and the secondary peak in the XRD, which represented the respective mass percentages of Na₄Fe₃(PO₄)₂P₂O₇ and NaFePO₄.
6. The specific surface area of the cathode material was tested by using nitrogen gas adsorption specific surface area analysis method according to GB/T 19587-2017 and calculating through the BET (Brunauer Emmett Teller) method.
7. The powder resistivity of the cathode material was tested by using a resistivity tester such as the ST2722 powder resistivity tester produced by Suzhou Lattice Electronics Co., Ltd.
8. The proportions of individual elements and Ti content in the cathode material were tested by using inductively coupled plasma atomic emission spectroscopy (ICP-OES) method.
9. The pH value of the cathode material was tested as follows: adding a certain amount of cathode material into an appropriate amount of deionized water according to a certain solid-liquid ratio such as a mass/volume ratio of 1: 10, fully dispersing the cathode material in the water with a magnetic stirrer to form a uniform suspension, immersing a pH electrode of a pH meter in the suspension, measuring the potential difference, calculating the pH value of the suspension based on the relationship between the potential difference and the pH value, thereby obtaining the pH value of the cathode material.
10. Iron dissolution amount of cathode material was determined as follows: 1 g of a test sample was added into 100 mL of 0.1 mol/L hydrogen fluoride-ethanol solution, stirred to dissolve at 45°C for 30 min, then filtered; and an iron content in the filtrate was measured by inductively coupled plasma atomic emission spectroscopy (ICP-OES) to obtain the iron dissolution amount.
11. A free sodium content of the cathode material was determined by potentiometric titration.
12. Performance tests of sodium-ion battery
   (1) Preparation of cathode plates: The cathode materials prepared in the above examples and comparative examples, conductive carbon black and polyvinylidene fluoride (PVDF) were mixed in a mass ratio of 85:8:7, and an appropriate amount of N-methyl pyrrolidone (NMP) was added to form a uniform electrode slurry. The electrode slurry was then evenly coated on an aluminum foil, dried under vacuum and then cut into circular electrode plates with a diameter of 15 mm, which were then transferred to a glove box for later use.
   (2) Battery assembly: CR2032 button cell was assembled in a glove box filled with argon gas, using sodium metal as a counter electrode, a separator made of glass fibers, an electrolyte containing 1 mol/L of sodium perchlorate as the solute, and propylene carbonate, ethylene carbonate and fluoroethylene carbonate in a volume ratio of 1:1:0.05 as the solvent.
   (3) Tests of charge specific capacity, discharge specific capacity, and cycling performance

The charge and discharge tests were performed at current densities of 0.2 C and 1 C respectively in a constant current charge and discharge mode at 25°C. The charge cut-off voltage was 4.0 V, and the discharge cut-off voltage was 2.0 V. The initial charge specific capacity, initial discharge specific capacity, and capacity retention rate at 500th cycle of the battery were obtained.

The performance tests of the cathode materials and sodium-ion batteries in the above examples and comparative examples were shown in Table 1 to Table 3 below.

**Table 1**

| | Na (%) | Fe (%) | P (%) | C (%) | Moisture Content | pH value | Free sodium ions | Iron dissolution | Ti |
|---|---|---|---|---|---|---|---|---|---|
| Example 1 | 14.7 | 25.73 | 19.41 | 3.35 | 457ppm | 9.25 | 198ppm | 14.6ppm | 2935ppm |
| Example 2 | 14.61 | 25.99 | 20.15 | 1.26 | 368ppm | 9.46 | 234ppm | 16.7ppm | 2109ppm |
| Example 3 | 14.98 | 25.35 | 20.11 | 4.47 | 498ppm | 9.67 | 156ppm | 11.2ppm | 4267ppm |
| Example 4 | 14 81 | 25.65 | 19.48 | 3.24 | 414ppm | 9.21 | 207ppm | 14.1ppm | 2879ppm |
| Example 5 | 14.79 | 25.57 | 19.54 | 3.21 | 403ppm | 9.22 | 186ppm | 14.9ppm | 2853ppm |
| Example 6 | 14.84 | 25.97 | 19.12 | 3.32 | 439ppm | 9.23 | 211ppm | 15.8ppm | 2978ppm |
| Example 7 | 14.72 | 25.63 | 20.17 | 3.27 | 489ppm | 9.17 | 238ppm | 12.9ppm | 2884ppm |
| Example 8 | 14.11 | 25.87 | 19.57 | 3.31 | 358ppm | 9.29 | 267ppm | 14.3ppm | 2911ppm |
| Example 9 | 15.67 | 25.58 | 19.59 | 3.39 | 444ppm | 9.20 | 324ppm | 13.2ppm | 2899ppm |
| Example 10 | 14.73 | 25.68 | 19.38 | 3.38 | 498ppm | 9.01 | 227ppm | 14.2ppm | 2879ppm |
| Example 11 | 14.69 | 25.69 | 17.58 | 3.37 | 427ppm | 9.23 | 304ppm | 14.1ppm | 2903ppm |
| Comparative Example 1 | 14.77 | 25.64 | 19.49 | 3.15 | 495ppm | 9.05 | 506ppm | 30.2ppm | 3012ppm |
| Comparative Example 2 | 14.66 | 25.79 | 19.55 | 3.01 | 478ppm | 9.45 | 307ppm | 24.6ppm | 2994ppm |

**Table 2**

| | BET specific surface area | Powder resistivity | Mass percentage of NaFePO₄ in cathode material | Compaction density | Thickness of carbon-containing coating layer | Coverage rate of carbon-containing coating layer |
|---|---|---|---|---|---|---|
| Example 1 | 14.5 m²/g | 20.4Ω·cm | 0.03% | 2.32g/mL | 3.6nm | 99.2% |
| Example 2 | 10.5 m²/g | 43.6Ω·cm | 0.04% | 2.28g/mL | 3.9nm | 99.3% |
| Example 3 | 16.4 m²/g | 15.8Ω·cm | 0.12% | 2.36g/mL | 3.4nm | 99.1% |
| Example 4 | 14.9 m²/g | 20.1Ω·cm | 0.06% | 2.28g/mL | 3.2nm | 98.7% |
| Example 5 | 14.2 m²/g | 20.9Ω·cm | 0.02% | 2.37g/mL | 3.7nm | 99.6% |
| Example 6 | 15.3 m²/g | 19.8Ω·cm | 0.08% | 2.26g/mL | 3.5nm | 98.5% |
| Example 7 | 12.9 m²/g | 22.4Ω·cm | 0.01% | 2.41g/mL | 3.2nm | 99.3% |
| Example 8 | 14.3 m²/g | 20.9Ω·cm | 0.03% | 2.34g/mL | 3.3nm | 99.1% |
| Example 9 | 14.2 m²/g | 20.1Ω·cm | 0.04% | 2.36g/mL | 3.3nm | 98.9% |
| Example 10 | 15.3 m²/g | 14.9Ω·cm | 0.04% | 2.30g/mL | 3.8nm | 99.1% |
| Example 11 | 13.1 m²/g | 29.7Ω·cm | 0.05% | 2.37g/mL | 3.2nm | 98.6% |
| Comparativ e Example 1 | 17.4 m²/g | 267.5Ω·cm | 1.01% | 2.04g/mL | 1.2nm | 96.5% |
| Comparativ e Example 2 | 15.2 m²/g | 27.1Ω·cm | 3.52% | 2.19g/mL | 1.9nm | 96.9% |

**Table 3**

| | Initial charge specific capacity at 0.2C (mAh/g) | Initial discharge specific capacity at 0.2C (mAh/g) | Initial discharge specific capacity at 1C (mAh/g) | Cycling performance at 1 C and 25°C (capacity retention rate at 500th cycle, %) |
|---|---|---|---|---|
| Example 1 | 123.5 | 116.5 | 105.6 | 99.1 |
| Example 2 | 120.8 | 113.2 | 102.1 | 98.2 |
| Example 3 | 125.7 | 115.9 | 103.5 | 98.8 |
| Example 4 | 123.1 | 116.3 | 105.2 | 99.0 |
| Example 5 | 123.9 | 116.8 | 105.9 | 99.2 |
| Example 6 | 122.6 | 115.4 | 104.6 | 98.4 |
| Example 7 | 124.5 | 117.4 | 106.7 | 99.4 |
| Example 8 | 120.1 | 112.4 | 101.2 | 97.9 |
| Example 9 | 124.9 | 117.2 | 106.3 | 99.5 |
| Example 10 | 123.1 | 1161 | 105.1 | 99.0 |
| Example 11 | 123.1 | 116.1 | 105.1 | 99.0 |
| Comparative Example 1 | 114.4 | 96.8 | 89.3 | 97.5 |
| Comparative Example 2 | 112.5 | 89.5 | 74.2 | 96.8 |

### III. Analysis of test results of the examples and comparative examples

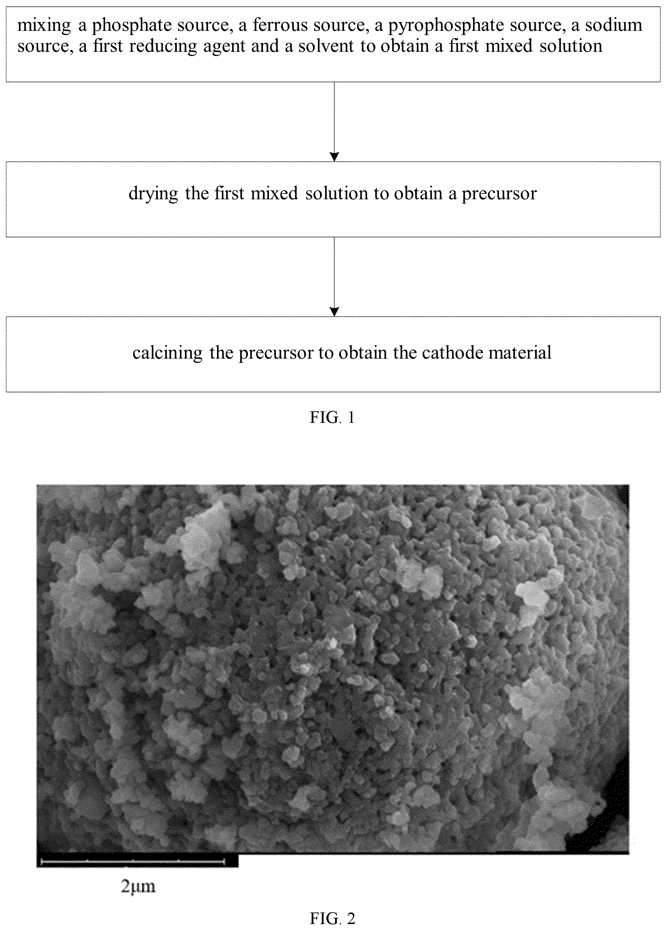

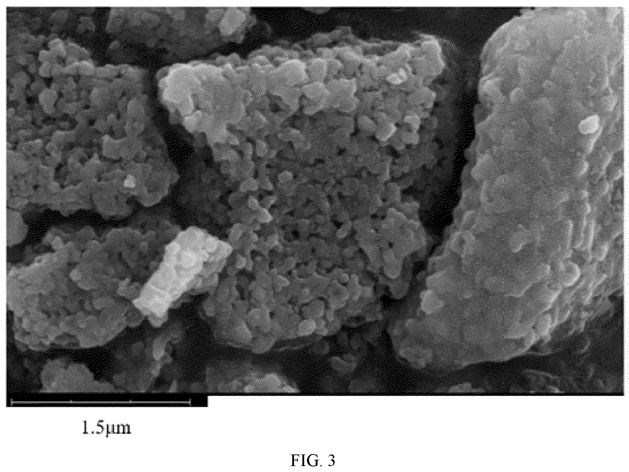

It can be seen from FIG. 2 and FIG. 3 that the cathode materials prepared in Example 1 and Example 2 have relatively uniform particle morphologies.

Referring to Table 1 and Table 2, in the cathode materials prepared in the examples, a mass fraction of sodium is ranged from 14% to 16%, a mass fraction of iron is ranged from 25% to 26%, a mass fraction of phosphorus is ranged from 17% to 21%, and a mass fraction of carbon is ranged from 1.2% to 4.5%, all of which are within the qualified ranges; and the free sodium content and iron dissolution amount are also relatively low. Compared to Comparative Example 1 which adopts the conventional solid phase method and a low calcination temperature to prepare the cathode material, the examples adopt the liquid phase method to prepare the cathode material, which realizes uniform mixing of pyrophosphate ions, phosphate ions, ferrous ions, sodium ions, etc. without the need of conversion into the pyrophosphate salt, renders a shorter solid diffusion path, allows calcination at a higher temperature, produces less amount of sodium iron phosphate impurity phase residue, and obtains the cathode material with more stable structure, higher compaction density, free sodium content and iron dissolution amount much lower than those in the cathode material of Comparative Example 1. In addition, Comparative Example 2 adopts the conventional solid phase method and a higher calcination temperature than that in Comparative Example 1 to prepare the cathode material. Compared with Comparative Example 2, the examples adopt the liquid phase method to prepare the cathode material, which realizes uniform mixing of pyrophosphate ions, phosphate ions, ferrous ions, sodium ions, etc. without the need of conversion into the pyrophosphate salt. As such, at a calcination temperature equivalent to or even higher than that of Comparative Example 2, the cathode materials obtained in the examples have much less amount of sodium iron phosphate impurity phase residue than that in the cathode material of Comparative Example 2.

Further, it can be seen from Table 2 that in the examples, a mass percentage of NaFePO₄ in each cathode material is less than 0.15%, and each cathode material has a specific surface area ranging from 10 m²/g to 15.5 m²/g, a compaction density ranging from 2.25g/mL to 2.45g/mL, and a powder resistivity ranging from 14 Ω·cm to 45 Ω·cm, and the carbon-containing coating layer has a thickness greater than 3 nm and a coverage rate greater than 98%.

Furthermore, it can be seen from Table 3 that the initial charge specific capacity at 0.2C for the examples is higher than 120 mAh/g, the initial discharge specific capacity at 0.2C is higher than 112 mAh/g, the initial discharge specific capacity at 1C is higher than 101 mAh/g, and the capacity retention rate at 500th cycle is greater than 97.5%.

Referring to the data in Table 2 and Table 3, in each of the examples, the cathode material was prepared by the cathode material preparation method provided in the present application, with reduced formation of the sodium iron phosphate impurity phase, and thus the cathode material has a relatively low mass percentage of the sodium iron phosphate impurity phase. In contrast, Comparative Example 1 and Comparative Example 2 adopted the solid phase method to prepare sodium iron phosphate-pyrophosphate, which generates more impurity phase residues and causes a relatively high mass percentage of the sodium iron phosphate impurity phase. When the respective cathode material prepared in the present application was adopted to prepare a battery, the prepared battery in each of the examples exhibited significantly higher charge specific capacity, discharge specific capacity and capacity retention rate than those of Comparative Example 1 and Comparative Example 2 through testing.

Further, it can be seen from the data of Examples 1 and 4 to 7 that the molar ratio of ferrous phosphate, pyrophosphate source such as pyrophosphoric acid, and the first reducing agent such as ascorbic acid will affect the mass percentage of the sodium pyrophosphate impurity phase, which will then affect the charge specific capacity, discharge specific capacity and capacity retention rate of the battery; and when the molar ratio thereof is in a range from 1:1.02:0.1 to 1:1.1:0.02, the mass percentage of the sodium pyrophosphate impurity phase is lower, and the capacity and cycling performance of the battery are higher. It can be seen from the data of Examples 1, 8 and 9 that the change of the molar ratio of sodium ions to ferrous ions can affect the mass percentage of the sodium pyrophosphate impurity phase. It can be seen from the data of Examples 1 and 10 that the combined use of sodium citrate and sodium acetate is beneficial to improving the compaction density of the cathode material and the coverage rate of the carbon-containing coating layer of the cathode material, thereby correspondingly improving the capacity and cycling performance of the cathode material. From the data of Examples 1 and 11, it can be seen that compared with the method of Example 11 using sodium dihydrogen phosphate and citric acid respectively as the sodium source and carbon source (i.e., introducing the sodium source and carbon source separately), Example 1 utilized sodium citrate and sodium acetate each as both the sodium source and the carbon source and the prepared cathode material exhibited relatively higher capacity and cycling performance.

In summary, by controlling the mass percentage of the sodium iron phosphate impurity phase in the cathode material within the range of 0% to 0.15%, the cathode material and corresponding battery can exhibit relatively excellent capacity and cycling performance.

It should be noted that the present application is not limited to the foregoing embodiments. The foregoing embodiments are merely examples, and embodiments having substantially the same configurations and effects as those of the technical conceptions within the scope of the present application are all included in the technical scope of the present application. In addition, various modifications that can be conceived by those skilled in the art may be made to the embodiments without departing from the spirit and scope of the present application, and other embodiments that are constructed by combining some of the components in the embodiments are also included in the scope of the present application.

## Claims

1. A cathode material, comprising a core, wherein the core comprises sodium iron phosphate-pyrophosphate and optionally sodium iron phosphate, and a mass ratio of sodium iron phosphate to sodium iron phosphate-pyrophosphate in the cathode material is (0-0.15): (99.85-100).

2. The cathode material according to claim 1, wherein the cathode material further comprises a carbon-containing coating layer coated on at least part of a surface of the core;
optionally, a thickness of the carbon-containing coating layer is 2 nm to 5 nm;
optionally, a coverage rate of the carbon-containing coating layer coated on the surface of the core is 97% to 100%.

3. The cathode material according to claim 1 or 2, wherein the cathode material satisfies one or more of the following conditions:
(1) a compaction density of the cathode material is 2.25 g/mL to 2.45 g/mL;
(2) a specific surface area of the cathode material is 10 m²/g to 15.5 m²/g;
(3) a powder resistivity of the cathode material is 14 Ω·cm to 45 Ω·cm.

4. A method for preparing a cathode material, comprising:
mixing a phosphate source, a ferrous source, a pyrophosphate source, a sodium source, a first reducing agent, and a solvent to obtain a first mixed solution;
drying the first mixed solution to obtain a precursor; and
calcining the precursor to obtain the cathode material;
wherein the cathode material comprises a core, the core comprises sodium iron phosphate-pyrophosphate and optionally sodium iron phosphate, and a mass ratio of sodium iron phosphate to sodium iron phosphate-pyrophosphate in the cathode material is (0-0.15): (99.85-100).

5. The method for preparing the cathode material according to claim 4, which satisfies one or more of the following conditions:
(1) the sodium source comprises an organic sodium salt;
optionally, the organic sodium salt comprises one or more of sodium citrate, sodium acetate, sodium malate, and sodium lactate, optionally comprises sodium citrate and/or sodium acetate, and further optionally comprises sodium citrate and sodium acetate;
optionally, when the organic sodium salt comprises sodium citrate and sodium acetate, a molar ratio of sodium citrate to sodium acetate is (0.1-0.6): (0.4-0.9);
(2) the first reducing agent comprises one or more of titanium trichloride, ammonium sulfite and ascorbic acid;
(3) the ferrous source comprises one or both of ferrous acetate and ferrous phosphate;
(4) the phosphate source comprises one or both of ferrous phosphate and phosphoric acid;
(5) the pyrophosphate source comprises pyrophosphoric acid and/or a pyrophosphate salt; optionally, the pyrophosphate salt comprises sodium pyrophosphate and/or ammonium pyrophosphate;
(6) in the first mixed solution, a molar ratio of iron, phosphorus and the first reducing agent is 3: (4.04-4.1): (0.05-0.1);
optionally, a ratio of phosphorus in the pyrophosphate source to phosphorus in the first mixed solution is (2.04-2.1): (4.04-4.1);
(7) in the first mixed solution, a molar ratio of sodium to iron is (1-1.08): 1, optionally (1.02-1.05): 1;
(8) the solvent comprises one or more of pure water, deionized water and distilled water;
(9) an average particle size of the precursor is 5 µm to 20 µm.

6. The method for preparing the cathode material according to claim 4 or 5, wherein the ferrous source is selected from ferrous phosphate, and the ferrous phosphate is prepared by a method comprising:
adding a first pH regulator into a second mixed solution containing a ferrous salt and a second reducing agent to regulate a pH value of the second mixed solution to be 7.2 to 7.5, thereby obtaining a sol containing ferrous hydroxide;
adding a second pH regulator into the sol to regulate a pH value of the sol to be 3.5 to 4.5, thereby obtaining the ferrous phosphate;
optionally, the first pH regulator comprises aqueous ammonia and/or sodium hydroxide, and further optionally comprises aqueous ammonia; and when the first pH regulator comprises aqueous ammonia, a concentration of the first pH regulator is 5 mol/L to 10 mol/L;
optionally, the second reducing agent comprises one or more of sodium borohydride, phosphorous acid and hydrazine hydrate;
optionally, the second pH regulator comprises phosphoric acid;
optionally, in the second mixed solution, a molar ratio of iron in the ferrous salt to the second reducing agent is 1: (0.01-0.1).

7. The method for preparing the cathode material according to claim 6, wherein after regulating the pH value of the sol to be 3.5 to 4.5, the method further comprises heating the sol to a temperature ranging from 80°C to 95°C, and then stirring for 30 min to 60 min.

8. The method for preparing the cathode material according to claim 4 or 5, wherein the calcining process comprises heating the precursor to a preset temperature and then maintaining the temperature at the preset temperature;
optionally, the preset temperature is 600°C to 700°C;
optionally, a time period of maintaining the temperature at the preset temperature is 4 h to 8 h;
optionally, the calcining process is performed under a protective atmosphere;
further optionally, the protective atmosphere comprises a nitrogen gas atmosphere and/or an argon gas atmosphere.

9. A cathode plate, comprising the cathode material according to any one of claims 1 to 3 or the cathode material prepared by the method for preparing a cathode material according to any one of claims 4 to 8.

10. A sodium-ion battery, comprising the cathode plate according to claim 9.
